# EUROPEAN PATENT SPECIFICATION

(11) **EP 2 949 441 B1**
(45) Date of publication and mention of the grant of the patent: **19.09.2018**
(21) Application number: 15163960.6
(22) Date of filing: 17.04.2015
(51) Int. Cl.: B29B 11/14, B29C 49/06

(54) **METHOD OF MANUFACTURING A CONTAINER**
VERFAHREN ZUR HERSTELLUNG EINES BEHÄLTERS
PROCÉDÉ POUR REALISER UN CONTENEUR

(30) Priority: 27.05.2014 EP 14170086
(43) Date of publication of application: 02.12.2015
(73) Proprietor: The Procter & Gamble Company, Cincinnati, OH 45202 (US)
(72) Inventor: De Tavares Duarte Noguiera, Francisco Miguel, 1853 Strombeek-Bever (BE)
(74) Representative: Siddiquee, Sanaul Kabir

(56) References cited:
- WO-A1-90/11938
- WO-A1-94/14696
- WO-A2-95/29806
- WO-A2-2005/102667
- WO-A2-2007/010286
- DE-A1- 2 341 400
- DE-U1-202009 015 668
- GB-A- 2 246 317
- US-A- 4 070 140
- US-A- 5 885 517

## Description

### TECHNICAL FIELD

A method for manufacturing a preliminary product and a container, the container having a collar with a further packaging component integrally molded to it, which can be attached to the collar via a connecting feature.

### BACKGROUND TO THE INVENTION

Containers, such as bottles, can be made using a number of techniques depending on the requirements of the container. For example, they can be made by either i) extrusion blow molding , wherein a parison is made by extruding molten material around a mold composed of 2 separate cavities, trapping a free end, forming a hollow area between the cavities and then blowing air through the parison, pushing it towards the cavities walls and making the bottle shape, or ii) first injection molding a preliminary product, often resembling a test tube shape with a collar area, then the preliminary product is moved to a different unit and is blown to make the bottle.
Often, it is desirable to attach an additional component to the collar. For instance, a spout, a clip element for holding a roller-ball in place, or an inner sealing cap. However, separately forming and then attaching such additional components results in greater process complexity, since molding of separate parts is required, and the parts have to be either manually assembled or assembled using specialist machinery.
Moreover, the preliminary product is typically formed in a molding unit, before being transferred to a separate blowing unit, to form the final container. This typically required the preliminary product to have been cooled down sufficiently that it is not deformed during removal from the molding cavity, transfer and mounting on to the blowing unit. This need for transferring the preliminary product to a separate blowing unit, and cooling down the preliminary product results in an increased cycle time to form the container, and hence reduces the process efficiency. Hence, a need remains for a packaging assembly, having an additional component attached to the container opening, which can be easily formed, filled and manipulated on a production line.

DE 20 2009 015668U1 (Hering Rolf) published on March 25, 2010, relates to a cover for sealing liquid container.

WO94/14696A1 (Hoover Universal) published on July 7, 1994, relates to integrally molded double cap produced by injection blow molding process.
US 5,885,517A (Hendrickson) published on February 11, 1997, relates to plastic container and body including a body portion, a neck defining a finish and having an opening therein and a closure connected to the end of the neck by a strap.
GB 2 246 317A (BXL Plastics Ltd) published on September 5, 1990, relates to a method of injection blow moulding of a dispensing container from a plastics material.
WO 90/11938A1 (Pittway Corp) published on October 6, 1990, relates to a container having a unitary hollow receptacle and closure. The container is formed according to a process in which an injection molding step forms a preform of thermoplastic material having a hollow body.

WO95/29806A2 (Grant) published on May 10, 1995, relates to containers and closures and a method of manufacturing a container, the process comprising the steps of:
a) injecting a sufficiently heated thermoplastic material into a first cavity to form a preliminary product comprising a collar having a first part of a first connecting feature, and an opening, and a further packaging component having a second part of the first connecting feature; then
b) cooling the preliminary product of step (a); then
c) blow molding the preliminary product in a second cavity to form a wall and base, which together form a void volume;wherein steps a) to c) are performed in a single forming unit, thend) removing the finished product produced in step c) from the single forming unit.

WO2005/102667A2 (Advanced Plastic Technologies) published on November 3, 2005, relates to an extruded blow molded bottle.
WO2007/010286A2 (Leafgreen Ltd) published on January 25, 2007, relates to molding apparatus.
DE 23 41 400A1 (Frupack Plastic) published on February 20, 1975, relates to a method of maing an extravertable-wall container by extruding a parison into a blow-mold cavity.
US 4,070,140A (Lucas) published on January 24, 1978, relates to apparatus for making precisely partitioned bulbous-shape container.

### SUMMARY OF THE INVENTION

According to the present invention there is provided a method in accordance with claim 1.

### SUMMARY OF THE FIGURES

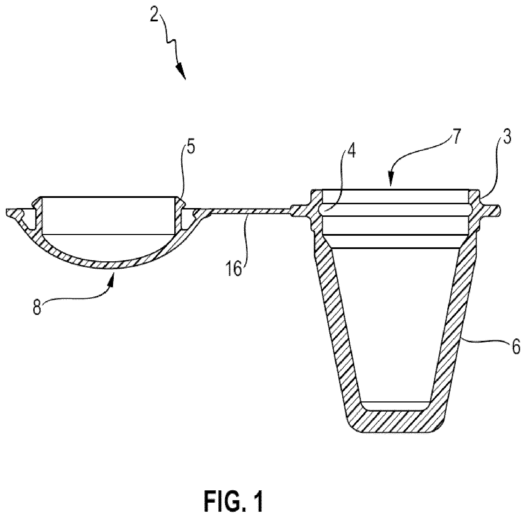

Figure 1 shows a side view of a preliminary product (2), wherein the further packaging component (8) is a cap which is attached to the collar (3) via an elongated element (16). The preliminary product (2) further comprises a body (6).

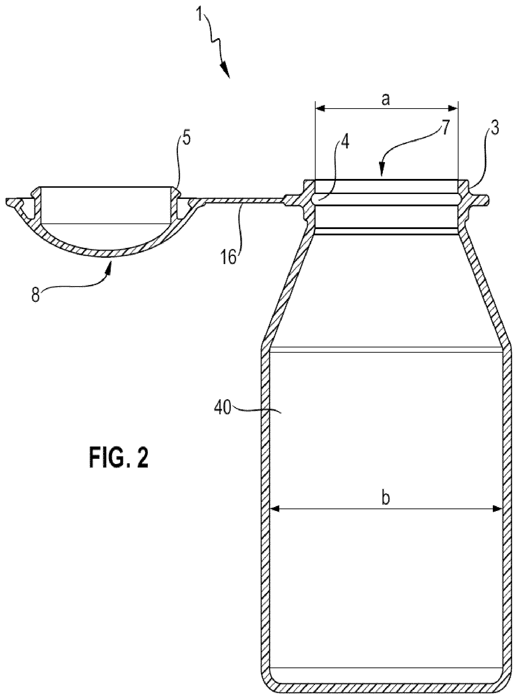

Figure 2 shows a container (1) formed after blow-molding the body (6) of the preliminary product of figure 1.
Figure 3 shows a preliminary product (2) which comprises a further packaging component (8) which is attached to the collar (3) via an elongated element (16), formed during a first injection step.
Figure 4 shows the preliminary product of figure 3, after the preliminary product body (6) has been added in a second injection step.
Figure 5 shows a preliminary product (2), wherein the further packaging component is a clipping means for a roller-ball.
Figure 6 shows a container (1), formed by blowing the body (6) of the preform of figure 5. The roller ball (14) is also shown. The roller ball (14) is first inserted into the opening (7) of the container, before being held in place by the further packaging component (8) which clips into the collar (3).
Figure 7 shows a preliminary product (2) which comprises a further packaging component (8), attached to the collar (3) via a hinge (15), and a second further packaging component (9), attached to the further packaging component (8) via an elongated element (16). The further packaging component (8) comprises a spout (12). The second further packaging component (9) forms a cap for the spout (12).
Figure 8 shows, in assembled form, part of the container (1) formed by blowing the body (6) of the preliminary product (2) of figure 7.
Figure 9 shows an injection molding unit of use in the process of the present invention, comprising a first mold part (17) and a second mold part (18), which form a first cavity (20). An injection gate (19) is also indicated for the injection molding unit. The injection molding unit also comprises an air vent (21) and a core shaft (22) for use in the subsequent blowing step.
Figure 10 shows the injection molding unit of figure 9, after the preliminary product (2) has been formed by injection molding. In order to simplify ejection, the second mold unit is comprised of multiple parts, as known in the art (not shown).
Figure 11 shows the preliminary product (2), after removal of the second mold part (18).
Figure 12 shows the preliminary product (2), in the blowing unit, formed with the replacement of the second mold unit (18) by a third mold unit (23), to form a second cavity (24).
Figure 13 shows the blowing unit of figure 12, after the preliminary product has been blown to form a container (1). The air vent (21) and core shaft (22) are shown in the "open" position for the blowing step.

### DETAILED DESCRIPTION OF THE INVENTION

Preliminary products (2) typically comprise side-walls and a bottom, being generally test-tube shaped. Such preliminary products (2) are then blow-molded to form the final container. The present preliminary product (2) comprises a collar (3) having the first part of a first connecting feature (4). A further packaging component (8), comprising the second part of the first connecting feature (5), is integrally molded to the collar (3). That is, the further packaging component (8) and collar (3) are formed together in a single mold. The further packaging component (8) can be integrally molded to the collar (3) by any suitable means, such as a hinge (15), an elongated element (16), or combinations thereof. Hinges are moveable joints, which allow the further packaging component (8) to be rotated such that the first part of the first connecting feature, located on the collar (3), can be joined with the second part of the first connecting feature (5), located on the further packaging component (8). Elongated elements, being long and thin, are sufficiently flexible, such that the further packaging component (8) can be rotated and fitted to the collar (3) via the first connecting feature. A hinge (15) is preferred, since the use of an elongated element (16) results in a loop of material being present on the collar (3) when the further packaging component (8) is attached to the collar (3) via the first connecting feature.

Preliminary products (2) having a collar (3) with a first part of a first connecting feature (4), and a further packaging component (8) with the second part of the first connecting feature (5), can be formed by injection molding. Such preliminary products (2) can be blown to form containers in which the further packaging component (8) can be attached to the collar (3) via the first connecting feature. The first part of a first connecting feature (4) is preferably located on the inner surface of the collar (3).

The collar (3) comprises an inner and an outer surface. The collar (3) comprises a first part of a first connecting feature (4). The collar (3) is designed to connect with the further packaging component (8) via the first connecting feature. As such, the further packaging component (8) comprises a second part of the first connecting feature (5). The collar (3) is accurately made and sufficiently rigid to serve the intended purpose. Preferably the first connecting feature (4) is selected from the group consisting of a feature capable of interlocking engagement between two surfaces, such as a bump-off frictional connection feature which requires opposite direction forces to engage and disengage, squeezing feature which require a combination of perpendicular and opposite direction forces to allow partial deformation of one or multiple parts creating space to engage and disengage, and a sealing feature. In a preferred embodiment, the first connecting feature comprises a cooperating protrusion and indentation.

Suitable further packaging components (8) include a cap, a spout, a transition unit, a scrubbing feature, a clipping means for holding a roller-ball or cylinder in place, or an inner sealing cap, and combinations thereof. Suitable caps seal the resultant container by closing the opening (7) of the collar (3). A transition piece is an element which facilitates assembling different packaging components which may be formed separately.

It is desirable that the further packaging component (8) cannot be separated from the collar (3), in order to prevent refilling, tampering with the ingredients, where the further packaging component (8) is a potential choking hazard, and the like. Since the further packaging component (8) is integrally molded with the collar (3), the further packaging component (8) is permanently attached to the collar (3). As such, the further packaging component (8) cannot be removed without first breaking the connection between the further packaging component (8) and collar (3). In contrast, containers of the prior art typically require a stronger connecting feature, requiring more material, and greater overlap in the contacting surfaces of the connecting feature between the further packaging component and collar (3), in order prevent removal of the further packaging component.

Where needed, the first connecting feature can comprise a tamper evident seal, a feature to prevent reclosing of the first connecting feature after it has been reopened, and combinations thereof. Suitable tamper evident seals and features to prevent reclosing of the first connecting feature after it has been reopened are known in the art.

The further packaging component (8) can be a spout. For controlled dosing of the container or bottle, the container or bottle preferably has a small opening. However, such small openings result in a container which is both slow and difficult to fill. A common means of overcoming these difficulties is through the use of a transition piece, and then attached to the collar (3), which allows packaging components separately formed to be connected to the container or bottle. However, the need to separately form and then attach the transition piece results in greater process complexity.

This production process enables the transition piece to be integrated in the container or bottle, eliminating or facilitating at least one step during assembly of all packaging components.

Examples of assemblies which benefit from the integration of the transition piece include caps, dosing containers, pre-assembled elements such as triggers, blades, filters, and meshes, that need to be connected to containers, bottles, handles, support structures, and multiple combinations thereof.

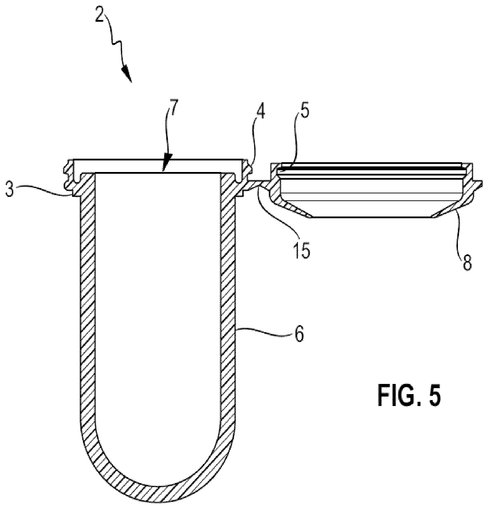

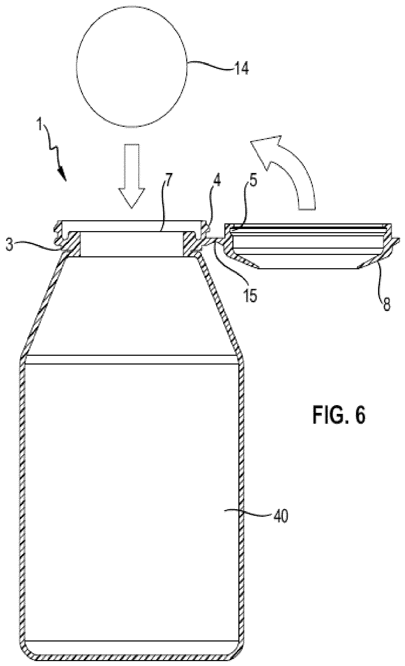

The further packaging component (8) can be a clipping means for holding a roller-ball (14) or roller cylinder in place (see figures 5 and 6). Containers, of the prior art, which comprise a roller ball or cylinder typically require at least three separate components, each separately formed and then assembled together: the container body, the roller ball or cylinder, and the clipping means for holding the roller-ball or cylinder in place after the container has been filled. Such containers are particularly suitable for use as applicator-packages for deodorants, antiperspirants, and other compositions to be applied to skin or other substrates.

The further packaging component (8) can be an inner sealing cap. Inner sealing caps can be used in order to prevent unseen tampering with the container contents, and also to limit leakage of the container contents during transport.

Where the preliminary product (2) and resultant container (100) comprises a second further packaging component (9), the collar (3) or further packaging component (8) may comprise a first part of a second connecting feature (10), in order to connect the second further packaging component (9) to the collar (3) or the further packaging component (8). In such cases, the second further packaging component (9) comprises a second part of the second connecting feature (11).

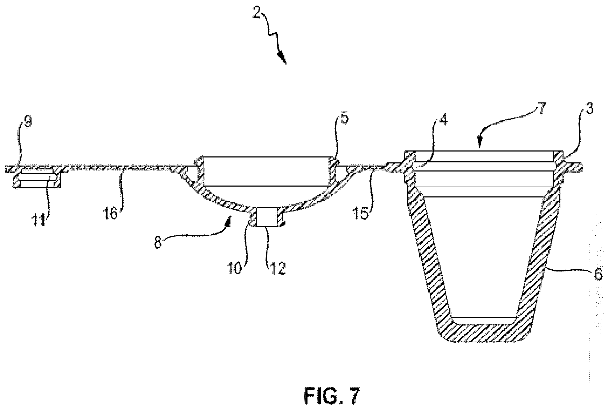

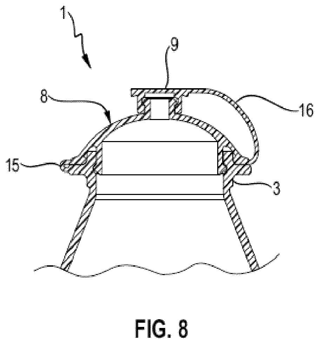

The second further packaging component (9) can be a cap or lid, such as when the further packaging component (8) comprises a spout (12) (see figures 7 and 8).

The preliminary product (2) of the present invention is preferably made using thermoplastic material. Any suitable thermoplastic material may be useful herein. Such thermoplastic materials may include normally solid polymers and resins. In general, any solid polymer of an aliphatic mono-1-olefin can be used within the scope of this invention. Examples of such materials include polymers and copolymers of aliphatic mono-1-olefins, such as ethylene, propylene, butene-1, hexene-1, octene-1, and the like, and blends of these polymers and copolymers. Polymers of aliphatic mono-1-olefins having a maximum of 8 carbon atoms per molecule and no branching nearer the double bond than the fourth position provide containers having particularly desirable properties. Other thermoplastic materials that can be used in the practice of the invention include the acrylonitrile-butadiene-styrene resins, cellulosics, copolymers of ethylene and a vinyl monomer with an acid group such as methacrylic acid, phenoxy polymers, polyamides, including polyamide-imide (PAI), polycarbonates, vinyl copolymers and homopolymer, polymethylmethacrylate, polycarbonate, diethyleneglycol bisarylcarbonate, polyethylene naphthalate, polyvinyl chloride, polyurethane, epoxy resin, polyamide-based resins, low-density polyethylene, high-density polyethylene, low-density polypropylene, high-density polypropylene, polyethylene terephthalate, styrene butadiene copolymers, acrylonitrile, acrylonitrile-butadiene copolymer, cellulose acetate butyrate and mixtures thereof, polyaryletherketone(PAEK or Ketone), polybutadiene (PBD), polybutylene (PB, Polybutylene terephthalate (PBT), Polyetheretherketone (PEEK), Polyetherimide (PEI), Polyethersulfone (PES)- see Polysulfone, Polyethylenechlorinates (PEC), Polyimide (PI), Polylactic acid (PLA), Polymethylpentene (PMP), Polyphenylene oxide (PPO), Polyphenylene sulfide (PPS), Polyphthalamide (PPA), Polystyrene (PS), Polysulfone (PSU), Polyvinyl chloride (PVC), Polyvinylidene chloride (PVDC), Spectralon. Further preferred materials include Ionomers, Kydex, a trademarked acrylic/PVC alloy, Liquid Crystal Polymer (LCP), Polyacetal (POM or Acetal), Polyacrylates (Acrylic), Polyacrylonitrile (PAN or Acrylonitrile), Polyamide (PA or Nylon), Polyamide-imide (PAI), Polyaryletherketone (PAEK or Ketone), Polybutadiene (PBD), Polybutylene (PB), Polybutylene terephthalate (PBT), polyethylene furanoate (PEF), and mixtures thereof.

Other thermoplastic materials that can be used in the practice of the invention include the group of thermoplastic elastomers, known as TPE, which include styrenic block copolymers, polyolefin blends, elastomeric alloys (TPE-v and TPV), thermoplastic polyurethanes (TPU), thermoplastic copolyester and thermoplastic polyamides.

Particularly preferred thermoplastic materials are those selected from the group consisting of polyolefins and derivatives thereof. More preferably the thermoplastic material is selected from the group consisting of polyethylene, polypropylene, including low-density, but particularly high-density polyethylene and polypropylene, polyethylene terephthalate, polyethylene furanoate (PEF), thermoplastic elastomers from polyolefin blends and mixtures thereof.

The container may be formed from a virgin resin, a reground or recycled resin, petroleum derived resins, bio-derived resins from plant materials, and combinations of such resins. The containers may comprise fillers and additives in addition to the base resin material. Exemplary fillers and additives include colorants, cross-linking polymers, inorganic and organic fillers such as calcium carbonate, opacifiers, and processing aids as these elements are known in the art.

In a first step of the method of the present invention, thermoplastic material is heated to a sufficient temperature and then injected into a first cavity (20) to make a preliminary product (2). The preliminary product (2) comprises a collar (3) and the further packaging component (8). The collar (3) comprises an inner and an outer surface. The collar (3) comprises the first part of a first connecting feature (4). The further packaging component (8) comprises the second part of the first connecting feature (5).

The collar (3) of the preliminary product (2), and subsequent finished container (1), is designed to connect with the further packaging component (8) via the first connecting feature. The collar (3) of the preliminary product (2) is accurately made and sufficiently rigid to serve the intended purpose. Preferably the first connecting feature (4) is selected from the group consisting of a feature capable of interlocking engagement between two surfaces, such as bump-off frictional connection feature which requires opposite direction forces to engage and disengage, squeezing feature which require a combination of perpendicular and opposite direction forces to allow partial deformation of one or multiple parts creating space to engage and disengage, and a sealing feature.

More preferably the first connecting feature is a bump off or sealing feature. More preferably the first connecting feature is a sealing feature. Sealing features prevent leakage of the contents of the container (1), from between the collar (3) and the further packaging component (8).

A sealing feature, where present, is designed to fit against the edge or side of the item, for example a container, to which the collar (3) is attached. The sealing feature should closely abut the container and is designed to prevent or reduce leakage of the contents of the container.

The preliminary product (2) can further comprises a second further packaging component (9) which is connected to the further packaging component (8), the collar (3), or combinations thereof.

The second further packaging component (9) may be a cap, or other sealing means. The second further packaging component (9) can also be a label, or a promotional item which can be removed by twisting, using a scissor, and the like. The second further packaging component (9) can be connected to the further packaging component (8) or collar (3) by a hinge (15) or elongated element (16).

If the second further packaging component (9) is to be further connected to a part of the container, that part of the container can comprise a first part of a second connecting feature (10). The second part of the second connecting feature (11) is located on the second further packaging component (9). Preferably, the first part of the second connecting feature (10) is located on the collar (3) or the further packaging component (8).

Preferably, the thermoplastic material is heated sufficiently to render the material fluid or malleable enough so as to be injected. The specific temperature needed to achieve this step is, of course, dependent on the material used. The material will preferably be heated to a temperature suitable to melt the material such that it may flow under pressure, however optionally or preferably should not be heated as far as the degradation temperature, where the material is liable to oxidation during molding operations and to chain degradation. In both cases molecular bonds on the material become weaker and the material becomes prone to faster degradation when exposed to environmental circumstances. Preferably polypropylene is heated to a temperature between 210-290°C. Preferably polyethylene terephthalate is heated to a temperature above 280°C. Preferably polyethylene is heated to a temperature between 130-170°C.

Heating of the material is achieved at any suitable and appropriate point in the process prior to injection, and using any suitable equipment for the purpose. However it is preferable that heating is achieved in commercially available injection molding equipment, such as an injection press, and is sufficient to force the molten material in a controlled way inside the mold. The press is preferably equipped with a ram or screw-type injection screw which heats up, melting the material and mixing it homogeneously and in a controlled manner. The material may be kept warm or heated during the transition between the injection screw or ram, and the mold, using standard injection molding equipment known as a runner, which forms the interface between the injection screw and the mold, manages the flow into the mold and in some cases maintaining the material temperature and pressure. The length of time necessary to heat the material is dependent on the material itself, the amount of material used, the design of the injection equipment and design of the container being made.

The fluid material is then injected into the first cavity (20). The material is preferably injected into the first cavity (20), through one or more injection gate (19), as quickly as possible, so as to reduce cycle time to its minimum possible, but slow enough so as to ensure the adequate filling of the first cavity (20). The speed of injection is dependent on the material chosen and on the design of the container to be made. Preferably the first cavity (20) is heated prior to and/or during injection from ambient temperature up to around 65°C.

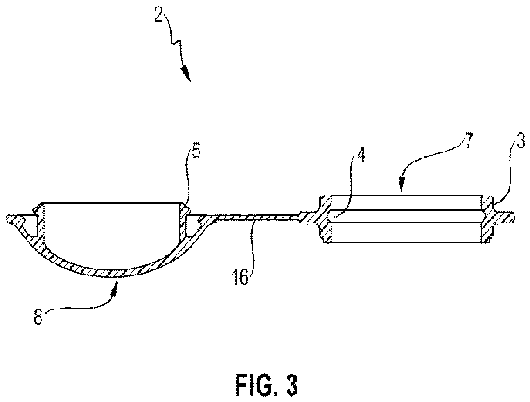

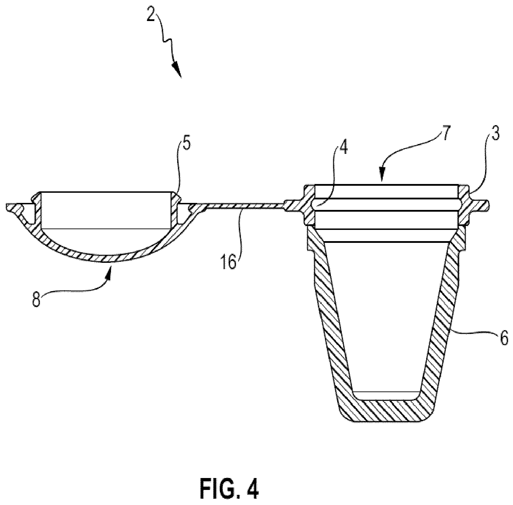

Preferably the preliminary product (2) is injected through at least two gates. This enables the use of at least two materials at the same time, such as different plastics or simply different colors on the same plastic. Multiple gates enable an aesthetic benefit where parts are differentiated from current executions, for instance by a different texture, color, and combination thereof. In addition, by injecting the at least two materials sequentially, the second, and any subsequent, material can be kept heated with less energy while the first material can be better controlled dimensionally (see figures 3 to 5). By choosing the first material to be the collar (3), one can achieve low variation of dimensions, specifically in the critical elements such as connections, ensuring leak tightness or other performances. By choosing a subsequent material as the body of the container, this subsequent material needs to be kept warm for a shorter period of time, thus minimizing energy needs and increasing the operating window during which the subsequent material is later blown.

Once the material is injected, the preliminary product (2) and, optionally the first cavity (20), may be cooled. The container and the first cavity (20) may be allowed to cool passively or actively. Passive cooling could involve simply leaving the container to cool naturally within the mold.

Active cooling may involve using a further device to assist and accelerate cooling. Active cooling may be achieved by passing a coolant, typically water, close to the mold, or blowing cool air, as another coolant example, at the first cavity (20) and/or container. The coolant absorbs the heat from the mold and keeps the mold at a suitable temperature to solidify the material at the most efficient rate. The molding unit can be opened when the part has solidified sufficiently to retain its shape, enabling the material to be demolded from the first cavity (20) without damage.

However the preliminary product (2) is not ejected from the molding unit. In contrast, injection molding, to form the preliminary product (2), and blowing, to form the container, occur in a single forming unit.

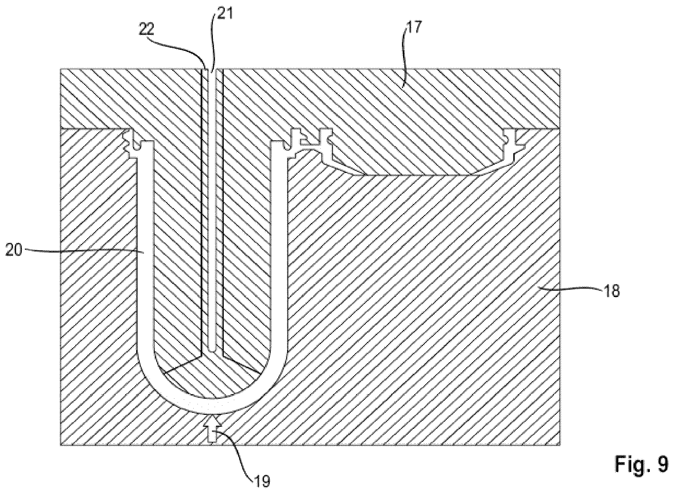

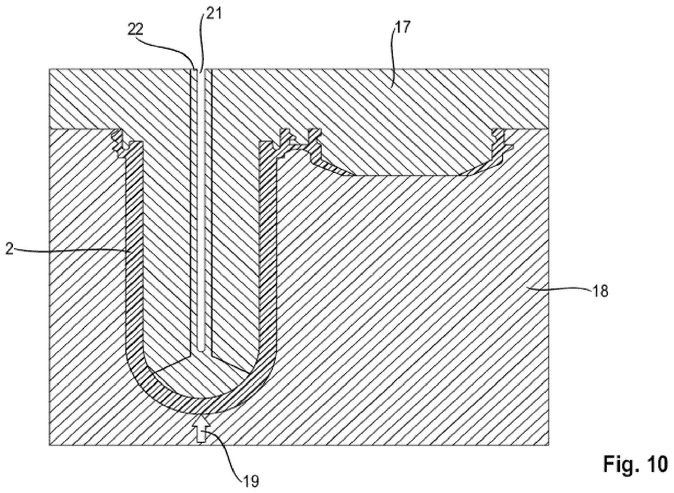

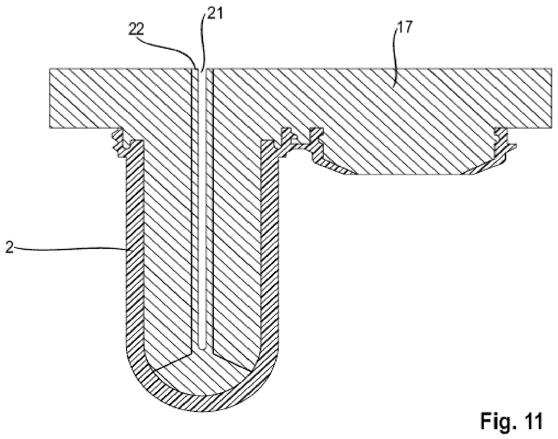

In the method of the present invention, the forming unit comprises an injection molding unit. The injection molding unit comprises at least a first mold part (17), and a second mold part (18). When combined, the mold parts form the first cavity (20) (see Figure 9) into which the preliminary product is formed. At least one mold part comprises a means for injecting the thermoplastic material into the first cavity (20). Once the preliminary product (2) has been formed (see Figure 10), at least one mold part is removed (see figure 11). The mold part which comprises the means for injecting the thermoplastic material, and the mold part which is removed after forming the preliminary product (2) can be the same or different. In preferred embodiments, the mold part which comprises the means for injecting the thermoplastic material, and the mold part which is removed after forming the preliminary product (2) are the same.

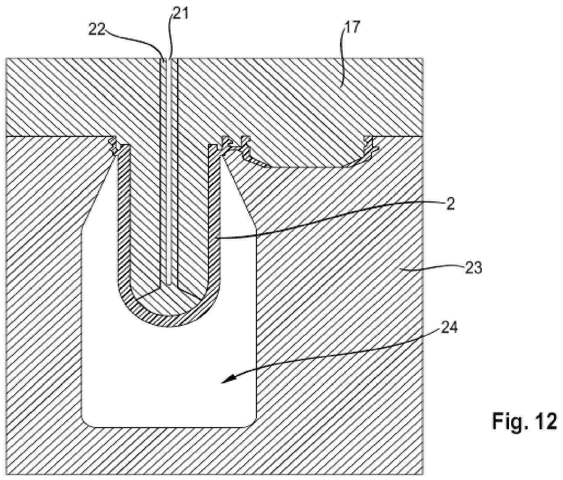

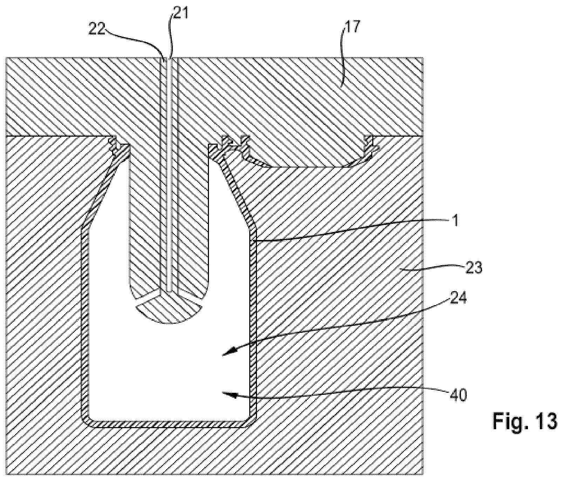

The mold part which is removed, is then replaced by a third mold part (23), such that the first mold part (17) and third mold part (23) form a blowing unit, which comprises a second cavity (24) (see Figure 12). The preliminary product (2) is then blown into the second cavity (24) to form the container (see figure 13).

Preferably at least the collar (3), more preferably the collar (3) and the further packaging component (8), of the preliminary product (2) is actively cooled to reduce deformation. More preferably the container is cooled using coolant which passed close to, but separate from the molding unit. Cooling can take from 1-15 seconds, preferably 2-10s, most preferably 3-8 seconds.

Actively cooling is beneficial to decreasing cycle times of the manufacturing process.

The preliminary product (2) is preferably allowed to cool to a point below the glass transition temperature of the material. At temperatures below the glass transition temperature, the preliminary product (2) rapidly solidifies, retaining its shape. For example, polypropylene is cooled to a temperature of approximately 50°C to 100°C, more preferably 50-60°C. In a particularly preferred embodiment, the collar (3) of the preliminary product (2) is permitted to cool, preferably below 50-60°C so that it retains its molded shape. The remaining area, which will be blown during step 3, may be kept at a higher temperature. Fast cooling the first cavity (20) and/or preliminary product (2) can add gloss or shine to portions of the outer surface thereof.

Further steps may be incorporated into the injection method of the present invention. It may be preferred to include multiple injection steps, or even multiple injection steps requiring multiple injection gates (19). In such embodiments, a first material may be injected into the first cavity (20) to produce first part of the preliminary product (2). The first part of the preliminary product (2) is then cooled to a temperature low enough to allow further mold operations without damaging the preliminary product (2). Preferably the first preliminary product (2) is cooled to a temperature between 88°C and 95°C. After the first material is cooled and sufficiently solid, the first cavity (20) shape is changed. A second material can then be injected into the first cavity (20) shape to make a second part of the preliminary product (2). The preliminary product (2) is made in such a way that the materials from the first and second injection are in direct contact with one another, allowing the materials to bond. Hence the temperature of both parts of the preliminary product (2) is preferably sufficient to achieve bonding, more preferably the temperature is higher than 88°C.

The second material to be injected can be the same material as the first material, or different.

Alternatively two materials may be injected simultaneously into the first cavity (20) during a co-injection technique.

Preferred equipment to achieve multiple injection steps is known as a core-back technology. Once the first material has been injected into the first cavity (20) via the injection gate (19), and it is sufficiently cooled, a core unit, or core-back, is removed creating an open space in the first cavity (20) which was previously not accessible to the first material at the time of the injection. Since the first material has now been formed and cooled, it cannot flow to occupy the newly made space.

A second injection can then take place, preferably at a different injection gate (19) within the newly open first cavity (20) space, to inject a second material, adding an additional feature to the preliminary product (2).

If both materials are the same or chemically similar, thermal bonding between them is improved.

It is also possible to inject different thermoplastic material, and whilst bonding between them is more difficult, it allows the container to have multiple characteristics, such as different transparency, opacity or flexibility.

Creating the preliminary product (2) from 2 materials permits the manufacturer to treat the materials and the injected containers thereof, differently. For example where the first material is used to make the collar (3) of the preliminary product (2), it may be cooled more quickly that the second material. The temperature of the second part of the preliminary product (2) can then be maintained at a higher temperature to improve efficiency during the blowing step, potentially reducing the need to reheat or prolong cooling. In this way, a preliminary product (2) may be built comprising further features, or use different coloured materials, materials with different translucency, or use different materials to perform a different function or provide an aesthetic difference benefit. Alternatively, the second material may be the same as the first material. Further injection steps may also be envisaged.

Following the injecting step, the preliminary product (2) is heated. The container is reheated to a temperature suitable for blow-molding. When reheating it is further preferred that the area of the preliminary product (2) to be blown is reheated uniformly. In accordance with the invention the material of the preliminary product (2) to be blown is heated, whereas the collar (3) is not heated. The benefit herein is that the collar (3) is not damaged during blow molding of the remaining material.

In the third step of the present method, the preliminary product (2) is blow molded in the second cavity to create a void volume (40). The preliminarily container is blown by submitting the internal space thereof to pressure. As such, the blowing unit comprises an air vent (21), as known to the skilled person. In preferred embodiments, the air vent (21) forms part of a core shaft (22) which can be extended in order to open a channel to the second cavity (24) for blowing.

When using polypropylene, the blow molding area is preferably at a temperature of 110°C to 140°C. The pressure, being omni-directionally exerted, causes the thermoplastic material to be forced outwardly. The second cavity (24) is that created by the mold. Once the material is applied to the relatively cold walls of the second cavity (24) and preliminary product (2), on contact therewith, the material cools rapidly and solidifies. The pressure applied has an influence on the uniformity and thickness of the material after the blowing step. High pressure, will improve uniformity and encourage thin walls, but may also result in areas of no material and holes. A low pressure may result in a lack of uniformity, and not successfully covering the whole blowing mold with material. The pressure to be selected is dependent on the material used and the shape of the mold.

The method of the present invention may be achieved using any suitable equipment. In a preferred embodiment however, the method is achieved using equipment comprising at least one section thereof capable of rotating about an axis. Preferably the rotating section is capable of rotating at least 90° or alternatively 180°. A section of this kind described is also known as a turning-table.

The purpose of this turning movement is to achieve multiple steps during a single molding cycle.

In the present method, the mold is first aligned with the injection capability. Then once the injecting step is complete and the preliminary product (2) made, the mold or part thereof, comprising the preliminary product (2), may be turned to coordinate with a blowing capability and the preliminary product (2) of the first step is blown. Alternatively, the turning movement of the molding unit can be performed outside the functional space where it connects with injection and blow molding capability. This can be realized through some kind of cassette system.

Alternatively, the equipment may not comprise a turning-table, and instead the preliminary product (2) and molding unit remain stationary and the injection capability is exchanged for blow-molding capability. Alternatively, in the present method, the mold is first aligned with the injection capability. Then once the injecting step is complete and the preliminary product (2) made, the mold or part thereof, comprising the preliminary product (2), may be transferred along a path, which may be linear, non-linear, with multiple direction changes, to coordinate with a blowing capability and the preliminary product (2) of the first step is blown.

The molding unit, or particularly a part thereof, also forms part of the blow mold cavity during the blowing step. This means that the preliminary product (2) will be blown against part of the molding unit, and/or against some of the preliminary product (2), and into the second cavity (24) (see Figure 12 and Figure 13). In this way, one can substantially reduce the complexity of the blow mold, and reduce or eliminate the need for this blow mold to open in two halves in order to eject the container. This is because the split line between the injection half mold and blow mold can be done in such a way to eliminate or reduce any 'undercut' for the container against the blow mold cavity during the de-molding operation, in case the blown cavity has a larger diameter than the neck itself.

Once the container is made, and after a suitable cooling, preferably to 50-60°C, at least part of the blowing unit is opened so that the container is ejected. The first mold part (17), third mold part (23), a further mold part which forms part of the blowing unit, or combinations thereof, may be constructed from separable parts, which separate in order to simplify ejection of the container.

Such constructions are well known in the art, and are particularly preferred where the container comprises elements which can hinder ejection, such as lips and outcrops.

The molding cycle can then be repeated. In a preferred embodiment, it is possible to use steps 1 and 3 at the same time, such that while a preliminary product (2) is being blown in step 3, another preliminary product (2) is being made in step 1.

The process of the present invention is particularly suited for providing a container comprising: a collar (3) having a first part of a first connecting feature (4), and a void volume (40), wherein the cross-sectional area of the void volume, b, is greater than the cross-sectional area of the opening (7) of the collar (3), a, often referred to as the "mouth" of the container. The inner surface (5), comprising the connecting feature (4), is typically oriented towards the longitudinal axis of the container (1). The cross-sectional area of the void volume (40) and the cross-sectional area of the opening (7) of the collar (3) are measured in a plane perpendicular to the longitudinal axis (100) of the container (1). Hence, the cross-sectional area is preferably at an angle of less than 30°, more preferably, less than 15° to the longitudinal axis of the container (1) (see for example, figure 3).

The longitudinal axis (100) is the axis along the lengthwise direction of the container (1) and passes through the center of gravity of the container, and is substantially perpendicular to the opening (7).

The collar (3) can be positioned around the longitudinal axis 100. The collar (3) can be positioned circumferentially around the longitudinal axis 100. The connecting feature (4) can be positioned on the collar (3) such that the connecting feature (4) is oriented towards the longitudinal axis (100).

The cross-sectional opening of the collar (3), a, is measured on the plane which results in the smallest area of the opening (7) at the collar (3). The cross-sectional opening at the collar (3), a, is measured at the position on the collar (3), where the cross sectional area is a minimum.

The cross-sectional area of the void volume, b, is measured on the plane parallel to the plane on which the cross-sectional opening of the collar (3), a, is measured, and is the cross-sectional area of the plane, bounded by the internal surface of the void volume (40). The void volume (40) is typically formed by a wall (60) and a base (50). Preferably, the cross-sectional area of the void volume, b, is measured at the position along the longitudinal axis (100) where it is a maximum.

The wall (60) can be peripherally more extensive orthogonally away from the longitudinal axis (100) than the collar (3). The wall (60) can be peripherally more extensive orthogonally away from the longitudinal axis (100) than the inner wall (3). The wall (60) can be peripherally more extensive orthogonally away from the longitudinal axis (100) than the collar (3) and inner wall (3).

The wall (60) can be peripherally more extensive orthogonally away from the longitudinal axis (100) than one or both of the collar (3) and inner wall (3).

The ratio of the cross-sectional area of the void volume, b, to the cross-sectional opening of the collar (3), a, is greater than 1, preferably greater than 1.35, more preferably greater than 1.69, even more preferably greater than 2.25. Preferably, the ratio of the cross-sectional area of the void volume, b, to the cross-sectional opening of the collar (3), a, is less than 25, preferably less than 6.25, more preferably less than 4.

The void volume (40) created during the blow molding step, preferably has a volume from 10ml to 5000ml, more preferably from 30ml to 1500ml, and most preferably from 50ml to 500ml. The void volume (40) describes the inner volume of the container and provides the area to be filed with composition to be contained therein. A particularly important advantage of this method of producing the container is that the void volume (40) can be altered without requiring entirely new equipment. To make containers of different void volume (40), it is only required to change the size of the second cavity (24) where the preliminary product (2) is blown. This benefit permits greater flexibility to the manufacturer and thus economic advantage.

The container is preferably injection blow molded, using the process described herein. In particular, the collar (3) is preferably injection molded, so that the first part of the first connecting feature, located on the collar (3), is sufficiently precise as to form a good seal with the further packaging component (8) to which the collar (3) is to be connected.

For improved attachment, the collar (3) is made from a material having a hardness, as measured on the Rockwell scale (ISO 2039-2), of from 50 to 150, preferably from 60 to 100, and most preferably from 65 to 85.

For improved handling and rigidity, the wall material, and preferably the base material, which forms the void volume (40), preferably is made from a material having a hardness, as measured on the Rockwell scale (ISO 2039-2), of from 50 to 150, preferably from 60 to 100, and most preferably from 65 to 85.

The blown part of the container may be of any shape, however the collar (3) is shaped to cooperate with the further packaging component (8).

For containers of the prior art, a production line has to manipulate both the container and the further packaging component (8) separately, bringing them together, orienting them, and finally connecting them together. For containers of the present invention, the further packaging component (8) is attached to the container body. As a result, there is no need for the container and further packaging component (8) to be brought together and oriented. As a result, the process of connecting the further packaging component (8) and container body, using the first connecting feature, is greatly simplified.

The dimensions and values disclosed herein are not to be understood as being strictly limited to the exact numerical values recited. Instead, unless otherwise specified, each such dimension is intended to mean both the recited value and a functionally equivalent range surrounding that value.

For example, a dimension disclosed as "40 mm" is intended to mean "about 40 mm".

## Claims

1. A method of manufacturing a container (1), the method comprising the steps of:
(a) injecting a sufficiently heated thermoplastic material into a first cavity (20) to form a preliminary product (2) comprising a collar (3) having a first part of a first connecting feature (4), and an opening (7), and a further packaging component (8) having a second part of the first connecting feature (5); then
(b) cooling the preliminary product (2) of step (a); then an area of the preliminary product (2) to be blown is reheated to a temperature suitable for blow-molding wherein the collar (3) is not reheated;
(c) blow molding the preliminary product (2) in a second cavity (24) to form a wall and base, which together form a void volume (40);
wherein steps a) to c) are performed in a single forming unit, then
(d) removing the finished product produced in step c) from the single forming unit.

2. The method according to claim 1, comprising at least one further injection steps, subsequent to step (a), to form a preliminary product body (6).

3. The method according to any of claims 1 or 2, wherein the preliminary product is cooled after step (a), by passive or active means.

4. The method of any preceding claims, wherein the first cavity (20) is formed by a molding unit which comprises at least a first mold part (17), and a second mold part (18).

5. The method of any preceding claims, wherein the second cavity (24) if formed in a blowing unit which comprises the first mold part (17) and a third mold part (23).

6. The method of any preceding claims, wherein the void volume (40) has a volume of from 10ml to 5000ml, more preferably from 30ml to 1500ml, most preferably from 50ml to 500ml.

7. The method of any preceding claims, wherein the opening (7) of the collar (3) has a cross-sectional area, a, and the void volume (40) has a cross sectional area, b, such that the ratio of the cross-sectional area of the void volume, b, to the cross-sectional opening of the collar (3), a, is greater than 1.35, preferably greater than 1.70, more preferably greater than 2.25.

8. The method of any preceding claims, wherein the collar (3) is made from a material having a hardness, as measured on the Rockwell scale (ISO 2039-2), of from 50 to 150, preferably from 60 to 100, and most preferably from 65 to 85.

9. The method of any preceding claims, wherein the wall material, and preferably the base material, which forms the wall and base which form the void volume (40), are made from a material having a hardness, as measured on the Rockwell scale (ISO 2039-2), of from 50 to 150, preferably from 60 to 100, and most preferably from 65 to 85.

## Patentansprüche

1. Verfahren zum Herstellen eines Behälters (1), wobei das Verfahren die folgenden Schritte umfasst:
(a) Injizieren eines ausreichend erhitzten Thermoplastmaterials in einen ersten Hohlraum (20), um ein Vorprodukt (2) zu bilden, das ein Kragenstück (3) mit einem ersten Teil eines ersten Verbindungsmerkmals (4), und eine Öffnung (7), und einen weiteren Verpackungsbestandteil (8) mit einem zweiten Teil des ersten Verbindungsmerkmals (5) umfasst; anschließend
(b) Abkühlen des Vorprodukts (2) von Schritt (a); anschließend wird ein Bereich des zu blasenden Vorprodukts (2) erneut auf eine Temperatur erhitzt, die zum Blasformen geeignet ist, wobei das Kragenstück (3) nicht erneut erhitzt wird;
(c) Blasformen des Vorprodukts (2) in einem zweiten Hohlraum (24), um eine Wand und eine Basis zu bilden, die zusammen ein Hohlraumvolumen (40) bilden;
wobei Schritte a) bis c) in einer einzigen Formungseinheit durchgeführt werden, anschließend
(d) Entfernen des in Schritt c) hergestellten Endprodukts aus der einzelnen Formungseinheit.

2. Verfahren nach Anspruch 1, umfassend mindestens einen weiteren Injektionsschritt im Anschluss an Schritt (a), um einen Vorproduktkörper (6) zu bilden.

3. Verfahren nach einem der Ansprüche 1 oder 2, wobei das Vorprodukt nach Schritt (a) durch passive oder aktive Mittel gekühlt wird.

4. Verfahren nach einem der vorstehenden Ansprüche, wobei der erste Hohlraum (20) durch eine Formungseinheit gebildet wird, die mindestens ein erstes Formteil (17) und ein zweites Formteil (18) umfasst.

5. Verfahren nach einem der vorstehenden Ansprüche, wobei der zweite Hohlraum (24) in einer Blaseinheit gebildet wird, die das erste Formteil (17) und ein drittes Formteil (23) umfasst.

6. Verfahren nach einem der vorstehenden Ansprüche, wobei das Hohlraumvolumen (40) ein Volumen von 10 ml bis 5000 ml, mehr bevorzugt von 30 ml bis 1500 ml, am meisten bevorzugt von 50 ml bis 500 ml aufweist.

7. Verfahren nach einem der vorstehenden Ansprüche, wobei die Öffnung (7) des Kragenstücks (3) eine Querschnittsfläche, a, aufweist und das Hohlraumvolumen (40) eine Querschnittsfläche, b, aufweist, sodass das Verhältnis der Querschnittsfläche des Hohlraumvolumens, b, zur Querschnittsöffnung des Kragenstücks (3), a, größer als 1,35, vorzugsweise größer als 1,70, mehr bevorzugt größer als 2,25 ist.

8. Verfahren nach einem der vorstehenden Ansprüche, wobei das Kragenstück (3) aus einem Material mit einer gemäß der Rockwell-Skala (ISO 2039-2) gemessenen Härte von von 50 bis 150, vorzugsweise von 60 bis 100, und am meisten bevorzugt von 65 bis 85 hergestellt ist.

9. Verfahren nach einem der vorstehenden Ansprüche, wobei das Wandmaterial, und vorzugsweise das Grundmaterial, das die Wand und die Basis, die das Hohlraumvolumen (40) bilden, bildet, aus einem Material mit einer Härte, wie in der Rockwell-Skala (ISO 2039-2) gemessen, von 50 bis 150, vorzugsweise von 60 bis 100 und am meisten bevorzugt 65 bis 85 hergestellt ist.

## Revendications

1. Procédé de fabrication d'un récipient (1), le procédé comprenant les étapes consistant à :
(a) injecter un matériau thermoplastique suffisamment chauffé dans une première cavité (20) pour former un produit préliminaire (2) comprenant un collier (3) ayant une première partie d'une première caractéristique de raccordement (4) et une ouverture (7), et un autre composant de conditionnement (8) ayant une deuxième partie de la première caractéristique de raccordement (5) ; puis
(b) refroidir le produit préliminaire (2) de l'étape (a) ; ensuite, une zone du produit préliminaire (2) à souffler est réchauffée à une température appropriée pour le moulage par soufflage dans lequel le collier (3) n'est pas réchauffé ;
(c) mouler par soufflage le produit préliminaire (2) dans une deuxième cavité (24) pour former une paroi et une base, qui forment ensemble un volume de vide (40) ;
dans lequel les étapes a) à c) sont exécutées dans une unité de formage unique, puis
(d) retirer le produit fini produit à l'étape c) de l'unité de formage unique.

2. Procédé selon la revendication 1, comprenant au moins une étape d'injection supplémentaire, à la suite de l'étape (a), pour former un corps de produit préliminaire (6).

3. Procédé selon l'une quelconque des revendications 1 ou 2, dans lequel le produit préliminaire est refroidi après l'étape (a), par un moyen passif ou actif.

4. Procédé selon l'une quelconque des revendications précédentes, dans lequel la première cavité (20) est formée par une unité de moulage qui comprend au moins une première partie de moule (17) et une deuxième partie de moule (18).

5. Procédé selon l'une quelconque des revendications précédentes, dans lequel la deuxième cavité (24) est formée dans une unité de soufflage qui comprend la première partie de moule (17) et une troisième partie de moule (23).

6. Procédé selon l'une quelconque des revendications précédentes, dans lequel le volume de vide (40) a un volume allant de 10 mL à 5000 mL, plus préférablement de 30 mL à 1500 mL, le plus préférablement de 50 mL à 500 mL.

7. Procédé selon l'une quelconque des revendications précédentes, dans lequel l'ouverture (7) du collier (3) a une aire en coupe transversale, a, et le volume de vide (40) a une aire en coupe transversale, b, de telle sorte que le rapport de l'aire en coupe transversale du volume de vide, b, à l'ouverture en coupe transversale du collier (3), a, est supérieur à 1,35, de préférence supérieur à 1,70, plus préférablement supérieur à 2,25.

8. Procédé selon l'une quelconque des revendications précédentes, dans lequel le collier (3) est fabriqué à partir d'un matériau ayant une dureté, telle que mesurée sur l'échelle de Rockwell (ISO 2039-2), allant de 50 à 150, de préférence de 60 à 100, et le plus préférablement de 65 à 85.

9. Procédé selon l'une quelconque des revendications précédentes, dans lequel le matériau de paroi, et de préférence le matériau de base, qui forme la paroi et la base qui forment le volume de vide (40), sont fabriqués à partir d'un matériau ayant une dureté, telle que mesurée sur l'échelle de Rockwell (ISO 2039-2), allant de 50 à 150, de préférence de 60 à 100, et le plus préférablement de 65 à 85.
